# EUROPÄISCHE PATENTSCHRIFT

(11) **EP 2 214 931 B1**
(45) Veröffentlichungstag und Bekanntmachung des Hinweises auf die Patenterteilung: **08.01.2014**
(21) Anmeldenummer: 08844047.4
(22) Anmeldetag: 27.10.2008
(51) Int. Cl.: B60R 1/00, B60R 11/04

(54) **VORRICHTUNG MIT EINER KAMERAEINHEIT**
DEVICE HAVING A CAMERA UNIT
DISPOSITIF DOTÉ D'UNE UNITÉ CAMÉRA

(30) Priorität: 31.10.2007 DE 102007052402
(43) Veröffentlichungstag der Anmeldung: 11.08.2010
(73) Patentinhaber: Huf Hülsbeck & Fürst GmbH & Co. KG, 42551 Velbert (DE)
(72) Erfinder: BUSCHMANN, Gerd, 42553 Velbert (DE)
(74) Vertreter: Vogel, Andreas
(86) Internationale Anmeldenummer: PCT/EP2008/064502
(87) Internationale Veröffentlichungsnummer: WO 2009/056510

(56) Entgegenhaltungen:
- EP-A- 1 332 923

## Beschreibung

Die Erfindung betrifft eine Vorrichtung mit einer Kameraeinheit, die zur Bilderfassung des Außenbereiches eines Kraftfahrzeuges dient, und einem Deckelelement, das über einen Antrieb von einer Schließstellung in eine Offenstellung bewegbar ist, wobei in der Schließstellung des Deckelelementes die Kameraeinheit von außen unzugänglich sich hinter dem Deckelelement befindet, und die Kameraeinheit zu einer Aufnahmerichtung ausgerichtet ist, bei der in der Offenstellung des Deckelelementes die Bilderfassung durchführbar ist. Des Weiteren bezieht sich die Erfindung auf ein Verfahren zum Betrieb der genannten Vorrichtung.

Kameraeinheiten, die zur Bilderfassung eines Außenbereiches des Kraftfahrzeuges dienen, sind allgemein bekannt. Beispielsweise können derartige Kameraeinheiten im Bereich des assistierten Einparkens von Kraftfahrzeugen zum Einsatz kommen. Die Kameraeinheiten erzeugen für den Kraftfahrzeugfahrer auf einem Bildschirm innerhalb der Fahrzeugkabine ein Bild des Außenbereiches, insbesondere der Rückansicht des Kraftfahrzeuges, welches eine wesentliche Unterstützung für den Fahrer darstellt. Es ist bekannt, derartige Vorrichtungen mit einer Kameraeinheit an diversen Fahrzeugstellen anzubringen, wie zum Beispiel an einem Stoßdämpfer, an einem Kotflügel, an einer Heckleiste usw.

Die EP 1332923A beschreibt (offenbart) die Merkmale des Oberbegriffs des unabhängigen Anspruchs 1.

In der DE 60 2004 003 255 T2 ist eine Kameraeinheit offenbart, die als Einparkhilfe für den Fahrer dient. Die Kameraeinheit weist ein Deckelelement auf, welches von einer Schließstellung in eine Offenstellung und umgekehrt bewegbar ist. Das Deckelelement ist an seinem distalen Ende mit einer Dichtung versehen, die bei einer Verschiebung des Deckelelementes im permanenten Kontakt mit der Kameraeinheit steht. Durch diesen Wischvorgang kann die Kameraeinheit von Schmutzpartikeln gereinigt werden. Es besteht jedoch die Gefahr, dass aufgrund des Wischvorganges Beschädigungen, insbesondere Verkratzungen an der Kameraeinheit, entstehen.

Es ist Aufgabe der vorliegenden Erfindung, eine Vorrichtung der genannten Art zu schaffen, die die oben genannten Nachteile vermeidet, insbesondere eine Vorrichtung mit einer Kameraeinheit bereitgestellt wird, die einen wirksamen Schutz der Kameraeinheit sowohl in der Schließstellung des Deckelelementes als auch während der Bewegung des Deckelelementes in seine Offenstellung ermöglicht.

Zur Lösung dieser Aufgabe wird eine Vorrichtung mit den Merkmalen des Anspruches 1 vorgeschlagen. In den abhängigen Ansprüchen sind bevorzugte Weiterbildungen ausgeführt.

Dazu ist erfindungsgemäß vorgesehen, dass der Antrieb mit einem derartigen Mechanismus zusammenwirkt, dass während der Bewegung von der Schließstellung in die Offenstellung das Deckelelement eine zweiphasige Bewegung ausführt. Der besondere Vorteil dieser Erfindung ist, dass bei der Bewegung von der Schließstellung in die Offenstellung das Deckelelement sich zunächst in einer ersten Bewegungsphase von der Kameraeinheit löst, ohne dass eine schädliche Kontaktierung unmittelbar an der Kameraeinheit, insbesondere an ihrem Objektiv auftritt. Nachdem ein definierter Abstand nach der ersten Bewegungsphase zwischen dem Deckelelement und der Kameraeinheit vorliegt, kann eine zweite Bewegungsphase eingeleitet werden, die das Deckelelement von der Kameraeinheit wegführt, so dass eine Bilderfassung des Außenbereiches des Kraftfahrzeuges durch die Kameraeinheit durchgeführt werden kann.

In einer bevorzugten Ausführung der erfindungsgemäßen Vorrichtung weist die zweiphasige Bewegung eine erste Bewegungsphase auf, bei der sich das Deckelelement von der Kameraeinheit entfernt, wobei insbesondere das Deckelelement im Wesentlichen in Aufnahmerichtung sich gleichzeitig bewegt. Vorzugsweise entspricht die Richtung der Bewegung des Deckelelementes während seiner ersten Bewegungsphase in etwa der Aufnahmerichtung der Kameraeinheit. Das bedeutet, dass sich das Deckelelement in Richtung des Außenbereiches des Kraftfahrzeuges bewegt, der als Bild über die Kameraeinheit erfasst werden soll. In einer bevorzugten Ausführungsform kann sich das Deckelelement gleichmäßig über seine gesamte Fläche von der Kameraeinheit entfernen, in dem das Deckelelement zum Außenbereich des Kraftfahrzeuges sich abhebt. Die Bewegung des Deckelelementes während der ersten Bewegungsphase kann beispielsweise translatorisch sein. Ebenfalls ist es denkbar, dass das Deckelelement über eine Dreh- und/oder Schwenkbewegung im Wesentlichen in Aufnahmerichtung sich von der Kameraeinheit entfernt, bevor die zweite Bewegungsphase eingeleitet wird.

In einer möglichen Ausführungsform der erfindungsgemäßen Vorrichtung ist der Mechanismus innerhalb eines Gehäuses angeordnet, das eine schlitzförmige Öffnung aufweist, durch die sich das Deckelelement erstreckt. Vorteilhafterweise wird das Deckelelement während der zweiten Bewegungsphase durch die Öffnung bewegt, so dass in der Offenstellung das Deckelelement von außen nicht mehr sichtbar ist.

In einer möglichen Alternative weist der Mechanismus eine erste Achse auf, um die das Deckelelement drehbar beweglich ist. Während der ersten Bewegungsphase verschwenkt sich das Deckelelement um die erste Achse, wobei es sich zum Außenbereich des Kraftfahrzeuges der Kameraeinheit entfernend bewegt, wodurch keine Beschädigungen, insbesondere Kratzer, an der Kameraeinheit entstehen.

Besonders vorteilhaft ist, dass das Deckelelement an der der Kameraeinheit zugewandten Innenseite eine Dichtung aufweist, die in der Schließstellung des Deckelelementes auf der Kameraeinheit aufliegt. Hierdurch wird wirkungsvoll erreicht, dass während der Schließstellung keine Schmutzpartikel, Feuchtigkeit ect. zur Kameraeinheit gelangen können. In dieser genannten Stellung des Deckelementes ist die Kameraeinheit, insbesondere ihr Objektiv, wirkungsvoll geschützt. Der Mechanismus kann derart ausgeführt sein, dass in der Schließstellung eine gewisse Kraft auf das Deckelelement wirkt, wodurch das Deckelelement gegen die Kameraeinheit gedrückt wird. In der ersten Bewegungsphase hingegen löst sich das Deckelelement mit der Dichtung von der Kameraeinheit, ohne entlang der Kameraeinheit zu gleiten und eventuelle Verschleißspuren an der Objektivlinse der Kameraeinheit entstehen zu lassen.

Der Mechanismus kann eine zweite Achse aufweisen, um die sich das Deckelelement während der zweiten Bewegungsphase verschwenkt. Vorteilhafterweise ist während der zweiten Bewegungsphase eine Bewegung des Deckelelementes um die erste Achse blockiert. Hierbei ist der Mechanismus derart ausgeführt, dass die erste Bewegungsphase und die zweite Bewegungsphase sequenziell ausgeführt werden. In einer weiteren Ausführungsform können sich die beiden Bewegungsphasen auch überlappen beziehungsweise können beide Bewegungsphasen zumindest teilweise gleichzeitig erfolgen, das bedeutet, dass bevor die erste Bewegungsphase beendet ist bereits die zweite Bewegungsphase über den Mechanismus zur Bewegung des Deckelelementes gestartet wird.

Vorzugsweise ist eine Deckeleinheit vorgesehen, die mit dem Deckelelement ausgeführt ist. Durch die Deckeleinheit verläuft die erste Achse. Die Deckeleinheit ist mit dem innerhalb des Gehäuses angeordneten Mechanismus in Wirkverbindung, wobei während der ersten Bewegungsphase die Deckeleinheit sich um die erste Achse verschwenkt. Der Antrieb kann beispielsweise über ein Verbindungselement mit der Deckeleinheit verbunden sein. Hierbei ist das Verbindungselement an einem ersten Angriffspunkt an der Deckeleinheit befestigt. Das Verbindungselement übt eine gewisse Kraft auf das Deckelelement aus, so dass die erste und die zweite Bewegungsphase des Deckelelementes ausgeführt werden kann.

In einer die Erfindung verbessernden Maßnahme kann die Deckeleinheit drehbar um die erste Achse an einem Hebel angeordnet sein, der sich während der zweiten Bewegungsphase um die zweite Achse verschwenkt. In Schließstellung des Deckelelementes ist der Hebel vom Verbindungselement entkoppelt, dass bedeutet, dass sowohl in der Schließstellung als auch in der ersten Bewegungsphase über das Verbindungselement die Deckeleinheit um die erste Achse verschwenkt werden kann. Jedoch verbleibt der Hebel in seiner Position. Die zweite Bewegungsphase erfolgt hingegen über den Hebel, der sich um die zweite Achse mit der Deckeleinheit und dem Deckelelement verschwenkt, bis die Offenstellung des Deckelelementes erreicht ist.

In einer bevorzugten Ausführungsform der erfindungsgemäßen Vorrichtung werden die zwei unterschiedlichen Bewegungsphasen dadurch realisiert, dass bei der zweiten Bewegungsphase die erste Bewegungsphase blockiert ist. Hierfür kann ein Blockierelement an der Deckeleinheit vorgesehen sein, das mit einer Kontaktierungsfläche am Hebel derart zusammenwirkt, dass in der Schließstellung des Deckelelementes das Blockierelement zumindest bereichsweise beabstandet zur Kontaktierungsfläche ist und in der zweiten Bewegungsphase das Blockierelement auf der Kontaktierungsfläche aufliegt. Während der ersten Bewegungsphase nähert sich das Blockierelement der Kontaktierungsfläche des Hebels immer weiter an, bis es schließlich auf der Kontaktierungsfläche aufliegt. Das Blockierelement dient als Anschlagsfläche, die bei Berührung der Kontaktierungsfläche des Hebels die erste Bewegungsphase blockiert. Die Kraft, die das Verbindungselement auf die Deckeleinheit ausübt, wird nun über das Blockierelement auf den Hebel übertragen. Somit ist der Hebel mit dem Verbindungselement gekoppelt, und über die nun auf den Hebel wirkende Kraft erfolgt eine Bewegung des Hebels um die zweite Achse. Da der Hebel an der ersten Achse mit der Deckeleinheit verbunden ist, wird gleichzeitig die zweite Bewegungsphase für die Deckeleinheit eingeleitet, bei der der Hebel die Deckeleinheit um die zweite Achse verschwenkt.

Ferner wird die oben genannte Aufgabe durch ein Verfahren gemäß den Merkmalen des Anspruches 19 gelöst. In den abhängigen Verfahrensansprüchen sind bevorzugte Ausführungsformen ausgeführt.

Erfindungsgemäß ist vorgesehen, dass der Antrieb mit einem derartigen Mechanismus zusammenwirkt, dass während der Bewegung von der Schließstellung in die Offenstellung und umgekehrt das Deckelelement eine zweiphasige Bewegung ausführt.

Vorteilhafterweise weist die zweiphasige Bewegung eine erste Bewegungsphase auf, bei der das Deckelelement sich von der Kameraeinheit entfernt und insbesondere sich gleichzeitig im Wesentlichen in Aufnahmerichtung bewegt.

In einer vorteilhaften Alternative kann in der ersten Bewegungsphase das Deckelelement um eine erste Achse gedreht werden und in einer zweiten Bewegungsphase das Deckelelement von der Kameraeinheit weggeführt werden, wobei das Deckelelement um eine zweite Achse verschwenkt wird. In einer bevorzugten Ausführungsform der Erfindung dreht sich das Deckelelement während der zweiten Bewegungsphase nicht um die erste Achse. Die genannten Bewegungsphasen können alternativ auch zumindest teilweise gleichzeitig erfolgen.

In einer alternativen Ausführungsform der Erfindung kann in der ersten Bewegungsphase eine translatorische Bewegung des Deckelelementes im Wesentlichen in Richtung des Außenbereiches des Kraftfahrzeuges erfolgen. Auch die zweite Bewegungsphase kann über eine mehr oder weniger translatorisch ausgerichtete Bewegung des Deckelelementes gekennzeichnet sein.

Ebenfalls ist es denkbar, dass das Deckelelement in der Schließstellung dichtend an der Kameraeinheit anliegt. Hierfür kann beispielsweise eine Dichtung an der der Kameraeinheit zugewandten Innenseite des Deckelelementes vorgesehen sein, die in der Schließstellung schützend auf der Kameraeinheit, insbesondere um das Objektiv, anliegt. Während der ersten Bewegungsphase löst sich das Deckelelement leicht von der Kameraeinheit und wird um einen definierten Winkelbereich (α) um die erste Achse gedreht. Während der zweiten Bewegungsphase jedoch verschwenkt sich das Deckelelement gemeinsam mit der ersten Achse entlang eines Kreissegmentes um die zweite Achse.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1a: eine rein schematische Ansicht der erfindungsgemäßen Vorrichtung mit einer Kameraeinheit und einem Deckelelement in der Schließstellung,
- Fig. 1b: die Vorrichtung gemäß Fig. 1 a, wobei das Deckelelement sich von der Kameraeinheit gelöst hat,
- Fig. 1c: die Vorrichtung gemäß Fig. 1a, wobei sich das Deckelelement in der Offenstellung befindet,
- Fig. 2a: eine weitere Ausführungsform der Vorrichtung mit einer Kameraeinheit und einem Deckelelement, das sich in einer Schließstellung befindet,
- Fig. 2b: die Vorrichtung gemäß Fig. 2a, wobei das Deckelelement sich von der Kameraeinheit entfernt hat,
- Fig. 2c: die Vorrichtung gemäß Fig. 2a, wobei das Deckelelement sich in der Offenstellung befindet,
- Fig. 3: eine weitere Ausführungsform der erfindungsgemäßen Vorrichtung in dreidimensionaler Darstellung, wobei das Deckelelement sich in der Schließstellung befindet,
- Fig. 4: die Vorrichtung gemäß Fig. 3, bei der das Deckelelement eine erste Bewegungsphase durchgeführt hat,
- Fig. 5: die Vorrichtung gemäß Fig. 3, bei der das Deckelelement sich in einer zweiten Bewegungsphase befindet,
- Fig. 6: die Vorrichtung gemäß Fig. 3, bei der das Deckelelement sich in der Offenstellung befindet,
- Fig. 7: eine Explosionsdarstellung der wesentlichen Bauteile der Vorrichtung gemäß Fig. 3 und
- Fig. 8: eine Seitenansicht der Vorrichtung gemäß Fig. 3.

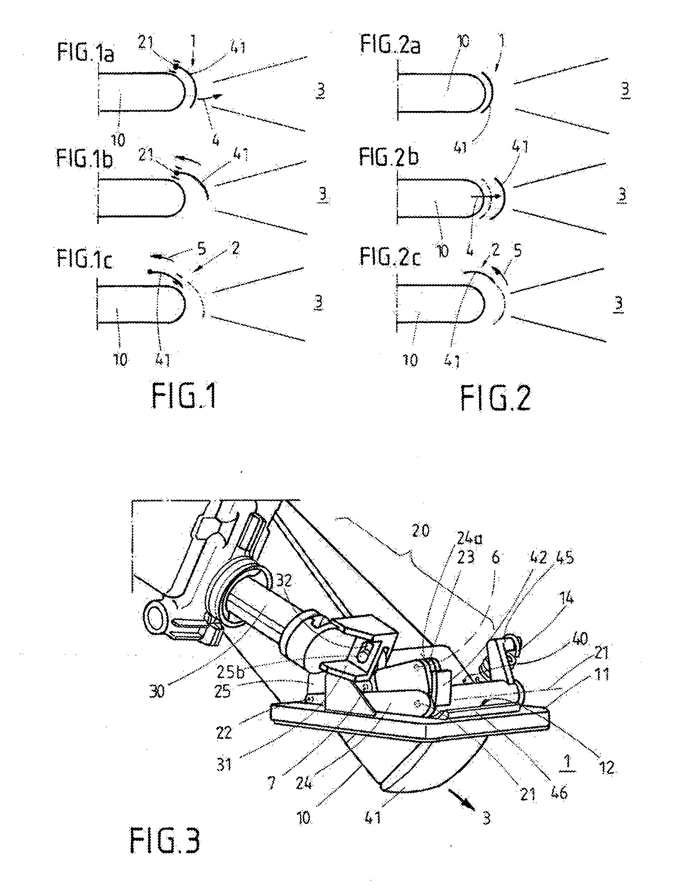

In den Fig. 1a bis 1c ist eine Kameraeinheit 10 mit einem Deckelelement 41 dargestellt. Die Kameraeinheit 10 dient zur Bilderfassung des Außenbereiches eines Kraftfahrzeuges, wobei das Deckelelement 41 von einer Schließstellung 1, die in Fig. 1a dargestellt ist, in eine Offenstellung 2 gemäß Fig. 1 c bewegbar ist. In der Schließstellung 1 befindet sich die Kameraeinheit 10 von außen unzugänglich hinter dem Deckelelement 41. Die Kameraeinheit 10 ist an der Fahrzeugkarosserie (nicht dargestellt) befestigt, wobei die Kameraeinheit 10 in eine Aufnahmerichtung 3 ausgerichtet ist. In der Offenstellung 2 des Deckelelementes 41 ist eine Bilderfassung der Kameraeinheit 10 durchführbar. Während der Bewegung von der Schließstellung 1 in die Offenstellung 2 führt das Deckelelement 41 eine zweiphasige Bewegung aus. Eine erste Bewegungsphase 4 zeichnet sich durch eine Schwenkbewegung des Deckelelementes 41 um eine erste Achse 21 aus. Bei dieser ersten Bewegungsphase 4 entfernt sich das Deckelelement 41 von der Kameraeinheit 10 und bewegt sich im Wesentlichen in Aufnahmerichtung 3. Durch diese erste Bewegungsphase 4 wird zunächst ein größerer Abstand zwischen dem Deckelelement 41 und der Kameraeinheit 10 geschaffen. In einer daran anschließenden zweiten Bewegungsphase 5 wird das Deckelelement 41 samt der ersten Achse 21 von dem Vorderbereich der Kameraeinheit 10 wegbewegt. Die Kameraeinheit 10 kann beispielsweise an einem nicht dargestellten Gehäuse befestigt sein, wobei in der zweiten Bewegungsphase 5 das Deckelelement 41 in das Gehäuse bewegt wird, so dass in der Offenstellung 2 gemäß Fig. 1c das Deckelelement 41 vollständig und für den Benutzer nicht sichtbar sich innerhalb des Gehäuses befindet.

In den Fig. 2a bis 2c ist eine weitere Ausführungsvariante der erfindungsgemäßen Vorrichtung dargestellt, bei der die erste Bewegungsphase 4 sich durch eine rein translatorische Bewegung des Deckelelementes 41 in Richtung der Aufnahmerichtung 3 kennzeichnet (s. Fig. 2b). Ausgehend von der Schließstellung 1 gemäß Fig. 2a erfolgt über einen nicht dargestellten Antrieb eine translatorische Bewegung des Deckelelementes 41, wodurch sich der Abstand des Deckelelementes 41 zur Kameraeinheit 10 vergrößert. Anschließend wird über die zweite Bewegungsphase 5, die in Fig. 2c dargestellt ist, das Deckelelement 41 aus dem Vorderbereich der Kameraeinheit 10 wegbewegt.

Bezüglich der soeben beschriebenen Ausführungsbeispiele gemäß Fig. 1 und Fig. 2 kann die zweite Bewegungsphase 5 auch eine rein translatorische Bewegung sein. Ebenfalls ist es denkbar, dass die zweite Bewegungsphase 5 dadurch realisiert wird, dass das Deckelelement 41 wie eine "Schiebetür" vor der Kameraeinheit 10 verfährt, um der Kameraeinheit 10 eine genügend große Sicht für die Bilderfassung zur Verfügung zu stellen. Beispielsweise kann ausgehend von Fig. 2b das Deckelelement 41 in Richtung der Zeichenebene schiebetürartig, senkrecht zur Bewegungsrichtung der ersten Bewegungsphase 4 bewegt werden.

Der besondere Vorteil dieser zweiphasigen Bewegung 4, 5 ist, dass die Kameraeinheit 10, insbesondere ihr Objektiv, während des Betriebes von der Schließstellung 1 in die Offenstellung 2 und umgekehrt schonend behandelt wird, da die Bewegung des Deckelelementes 41 berührungslos zur Kameraeinheit 10 erfolgt. Gemäß Fig. 1 und Fig. 2 kann selbstverständlich das Deckelelement 41 in seiner Schließstellung 1 unmittelbar auf der Kameraeinheit 10 aufliegen. Während der ersten Bewegungsphase 4 hebt gemäß Fig. 1 und Fig. 2 das Deckelelement 41 schonend, ohne Kratzer auf der Kameraeinheit 10 zu verursachen bis zu einem bestimmten Abstand zur Kameraeinheit 10 ab, bevor es in der zweiten Bewegungsphase 5 in Richtung der Offenstellung 2 des Deckelelementes 41 verfahren wird. Das Deckelelement 41 kann gemäß der Ausführungsformen aus Fig. 1 und Fig. 2 auf seiner Innenseite, die der Kameraeinheit 10 zugewandt ist, mit einer Dichtung ausgeführt sein, die in Schließstellung 1 des Deckelelementes 41 unmittelbar auf der Kameraeinheit 10, insbesondere dem Objektiv, aufliegt. Diese Dichtung schützt die Kameraeinheit 10 vor Feuchtigkeit, Schmutz ect. Im Ausführungsbeispiel gemäß Fig. 3 bis Fig. 8 ist eine weitere Ausführungsalternative der erfindungsgemäßen Vorrichtung dargestellt, die auf der Innenseite 41 a des Deckelelementes 41 mit einer derartigen Dichtung 43 ausgestaltet ist, worauf im Folgenden eingegangen wird:

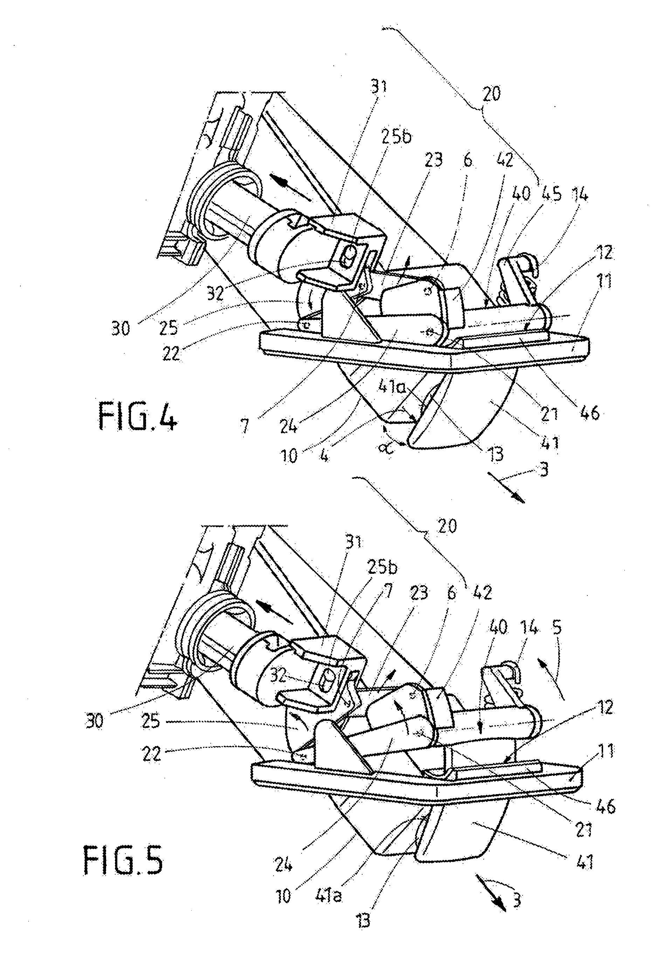

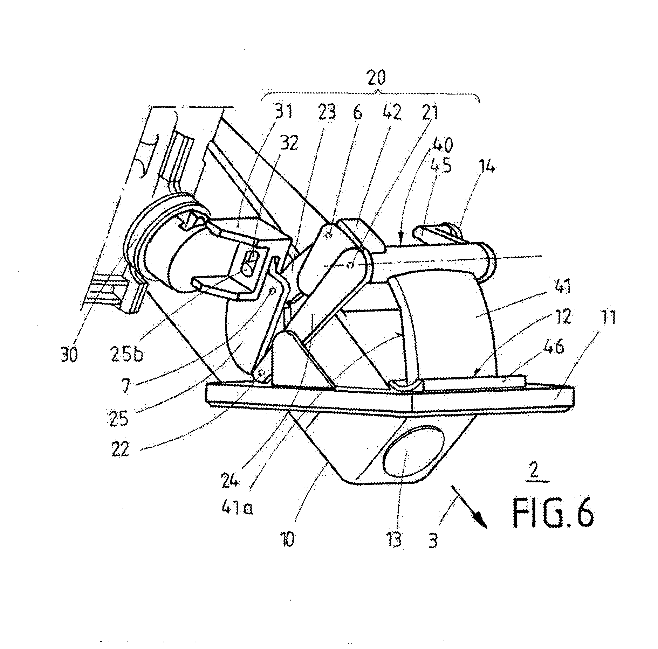

Fig. 3 zeigt die erfindungsgemäße Vorrichtung mit einer Kameraeinheit 10, auf der das Deckelelement 41 in seiner Schließstellung 1 aufliegt. Wie in den Fig. 1 und Fig. 2 wird das Deckelelement 41 über eine zweiphasige Bewegung von der Schließstellung 1 in eine Offenstellung 2, die in Fig. 6 dargestellt ist, bewegt. Hierbei weist die Vorrichtung einen Antrieb 30 auf, der mit einem Mechanismus 20 zusammenwirkt, so dass während der Bewegung von der Schließstellung 1 in die Offenstellung 2 das Deckelelement 41 zunächst eine erste Bewegungsphase 4 ausführt, bis die Position des Deckelelementes 41 in Fig. 4 erreicht ist. Ausgehend von Fig. 4 erfolgt über den Antrieb 30 und den Mechanismus 20 eine zweite Bewegungsphase 5, die in Fig. 5 gezeigt ist. In Fig. 6 erreicht das Deckelelement 41 seine Offenstellung 2.

Der Mechanismus 20 besteht aus einer Vielzahl von Bauteilen, die innerhalb eines Gehäuses 11 angeordnet sind. Das Gehäuse 11, das in Fig. 3 als eine Art Rahmen dargestellt ist, bildet eine Art Schnittstelle mit dem Kraftfahrzeug und verleiht der erfindungsgemäßen Vorrichtung einen modularen Charakter. Das Gehäuse 11 weist eine schlitzförmige Öffnung 12 auf, durch die sich das Deckelelement 41 in der Schließstellung 1 erstreckt. Während der Bewegung des Deckelelementes 41 bewegt sich das Deckelelement 41 durch die Öffnung 12 in das Gehäuse 11.

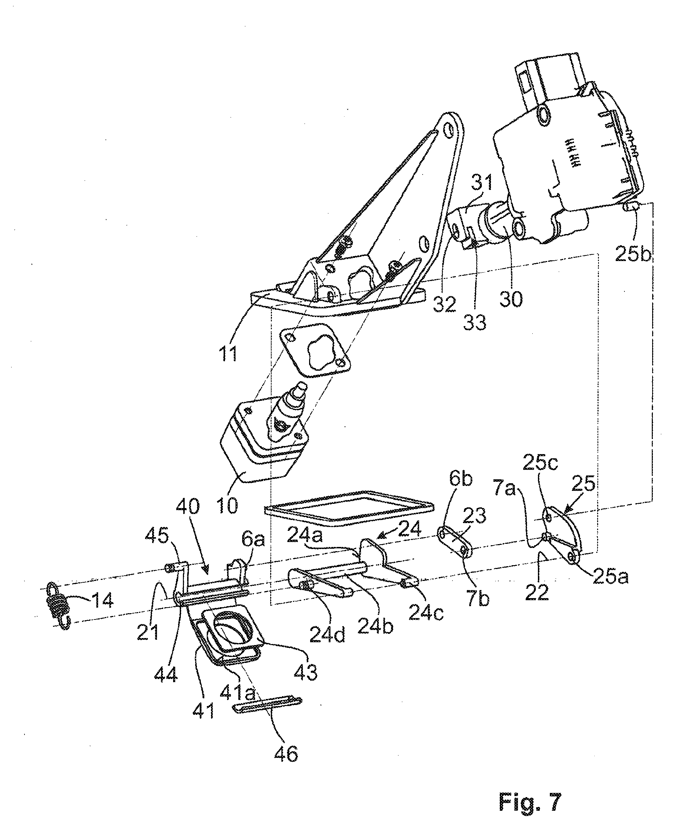

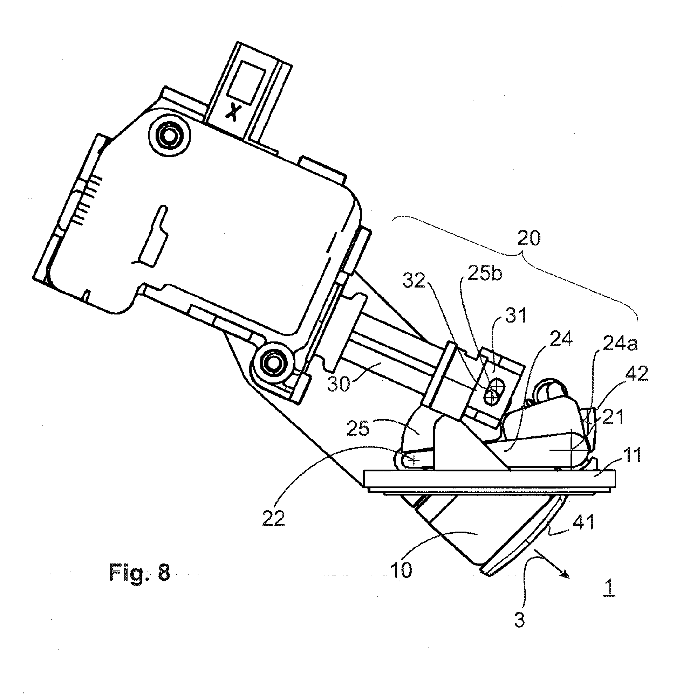

Der Mechanismus 20 weist eine erste Achse 21 auf, um die das Deckelelement 41 drehbar beweglich ist. Während der ersten Bewegungsphase 4, bei der sich das Deckelelement 41 von der Kameraeinheit 10 entfernt und im Wesentlichen in Aufnahmerichtung 3 sich bewegt, verschwenkt sich gleichzeitig das Deckelelement 41 um die erste Achse 21. In der Schließstellung 1 gemäß Fig. 3 liegt hierbei das Deckelelement 41 auf der Kameraeinheit 10 auf. Das Deckelelement 41 weist hierbei gemäß Fig. 7 eine Dichtung 43 auf seiner Innenseite 41a auf, die in der Schließstellung 1 des Deckelelementes 41 die Kameraeinheit 10, insbesondere das Objektiv der Kameraeinheit 10, schützend abdichtet. Ferner ist eine Deckeleinheit 40 vorgesehen, die mit dem Deckelelement 41 einstückig und materialeinheitlich ausgeführt ist und durch die die erste Achse 21 verläuft. Die Deckeleinheit 40 ist mit einem Blockierelement 42 innerhalb des Gehäuses 11 ausgeführt. Wie Fig. 3 und Fig. 8 ferner verdeutlichen, ist die Deckeleinheit 40 drehbar um die erste Achse 21 an einem innerhalb des Gehäuses 11 angeordneten Hebel 24 angeordnet. Der Hebel 24 weist eine Kontaktierungsfläche 24a auf, die mit dem Blockierelement 42 wie folgt zusammenarbeitet: In der Schließstellung 1 des Deckelelementes 41 ist das Blockierelement 42 zumindest bereichsweise beabstandet zur Kontaktierungsfläche 24a. Während der ersten Bewegungsphase 4 nähert sich das Blockierelement 42 der Kontaktierungsfläche 24a, bis es auf der Kontaktierungsfläche 24a vollständig aufliegt, welches in Fig. 4 gezeigt ist.

Zwischen dem Antrieb 30 und der Deckeleinheit 40 ist ein Verbindungselement 23 angeordnet. Die Deckeleinheit 40 ist an der ersten Achse 21 drehbar gelagert und das Verbindungselement 23 ist an einem ersten Angriffspunkt 6 an der Deckeleinheit 40 befestigt, welches ebenfalls in Fig. 7 zu erkennen ist. Der Angriffspunkt 6 wird durch einen Stift 6a der Deckeleinheit 40 gebildet, der durch eine entsprechende Öffnung 6b des Verbindungselementes 23 aufgenommen ist, welches in Fig. 7 zu erkennen ist.

Des Weiteren ist der Hebel 24 um eine zweite Achse 22 verschwenkbar. Ein Koppelelement 25 ist zwischen dem Antrieb 30 und dem Verbindungselement 23 angeordnet, wobei das Koppelelement 25 an einem zweiten Angriffspunkt 7 am Verbindungselement 23 drehbar befestigt ist. Der Angriffspunkt 7 wird durch einen Stift 7a des Koppelelementes 25 gebildet, der durch eine Öffnung 7b des Verbindungselementes 23 aufgenommen ist, welches in Fig. 7 zu erkennen ist. Das Koppelelement 25 ist drehbar um die zweite Achse 22 am Hebel 24 angeordnet. Darüber hinaus weist der Antrieb 30, der als Hubantrieb in diesem Ausführungsbeispiel ausgeführt ist, ein Lagerelement 31 auf, an dem das Koppelelement 25 beweglich gelagert ist. Das Lagerelement 31 weist ein Langloch 32 auf, in dem ein Stift 25b des Koppelelementes 25 geführt ist. Der Stift 25b ist in einer Öffnung 25c des Koppelelementes 25 befestigt.

Während der Antrieb 30 von der Schließstellung 1 gemäß Fig. 3 das Lagerelement 31 zurückbewegt, dreht sich das Koppelelement 25 um die zweite Achse 22, wobei über den zweiten Angriffspunkt 7 das Verbindungselement 23 leicht nach oben verschwenkt wird und gleichzeitig das Verbindungselement 23 am ersten Angriffspunkt 6 die Deckeleinheit 40 in das Innere des Gehäuses 11 zieht, wodurch eine Schwenkbewegung des Deckelelementes 41 um die erste Achse 21 ausgelöst wird. Der Hebel 24 verbleibt ohne sich zu bewegen während der ersten Bewegungsphase 4 innerhalb des Gehäuses 11.

Während der zweiten Bewegungsphase 5, bei der eine Bewegung des Deckelelementes 41 um die erste Achse 21 durch das auf der Kontaktierungsfläche 24a aufliegende Blockierelement 42 blockiert ist, verschwenkt sich die Deckeleinheit 40 sowie das Deckelelement 41 einschließlich des Hebels 24 um die zweite Achse 22. Während der zweiten Bewegungsphase 5, die in Fig. 5 dargestellt ist, ist eine Drehbewegung des Deckelelementes 41 um die erste Achse 21 blockiert. Hierbei dreht sich das Koppelelement 25 gegen den Uhrzeigersinn um die zweite Achse 22, wobei gleichzeitig der Stift 25a des Koppelelementes 25 von seiner oberen Stellung innerhalb des Langloches 32 sich in die untere Stellung gemäß Fig. 6 verschiebt. Im Gegensatz dazu erfolgt während der ersten Bewegungsphase 4 (s. Fig. 3 - Fig. 4) eine Bewegung des Stiftes 25a von der unteren Position in die obere Position des Langloches 32. In einer weiteren nicht dargestellten Ausführungsvariante können selbstverständlich die erste 4 und die zweite Bewegungsphase 5 zumindest teilweise gleichzeitig erfolgen.

In der Offenstellung 2 des Deckelelementes 41 kann eine Bilderfassung des Außenbereiches des Kraftfahrzeuges durch die Kameraeinheit 10 erfolgen. Im vorliegenden Ausführungsbeispiel ist die Kameraeinheit 10 fest, unbeweglich am Gehäuse 11 des Kraftfahrzeuges angeordnet. Selbstverständlich ist es denkbar, in einer weiteren nicht dargestellten Ausführungsform, dass zunächst die Kameraeinheit 10 in einer Ruheposition sich befindet. Während des Bewegungsvorganges des Deckelelementes 41 kann gleichzeitig die Kameraeinheit 10 aus ihrer Ruheposition in eine aktive Position herausgeschwenkt werden. Die Bewegung der Kameraeinheit 10 kann in die jeweilige Position rotatorisch und/oder translatorisch erfolgen. In dieser aktiven Position ist die schwenkbare Kameraeinheit 10 in Aufnahmerichtung 3 ausgerichtet, wie es in den dargestellten Ausführungsformen gezeigt ist. Ebenfalls ist es denkbar, dass zunächst die Kameraeinheit 10 angesteuert wird, um in die jeweilige Position ausgerichtet zu werden, und anschließend die zweiphasige Bewegung des Deckelelementes 41 zu Erreichung der Schließstellung 1 oder der Offenstellung 2 erfolgt.

Um Kratzer, Beschädigungen etc. während der Bewegungsphasen 4, 5 des Deckelelementes 41 an der Kameraeinheit 10 zu verhindern, löst sich in der ersten Bewegungsphase 4 das Deckelelement 41 leicht von der Kameraeinheit 10 und wird gleichzeitig um einen definierten Winkelbereich α um die ersten Achse 21 gedreht. Die Bewegung des Deckelelementes 41 während der ersten Bewegungsphase 4 erfolgt im Wesentlichen in Richtung der Aufnahmerichtung 3. Während der zweiten Bewegungsphase 5 wird gemäß den Fig. 4 bis Fig. 6 das Deckelelement 41 gemeinsam mit der Achse 21 entlang eines Kreissegmentes um die zweite Achse 22 verschwenkt.

In Fig. 7 sind zur Verdeutlichung die einzelnen Baugruppen der erfindungsgemäßen Vorrichtung dargestellt. Die Deckeleinheit 40 weist eine einseitig offene, C-förmige ausgestaltete Aufnahme 44 auf, in die der Hebel 24 mit seinem Verbindungssteg 24b einsetzbar ist. Der Verbindungssteg 24b bildet die erste Achse 21. Des Weiteren weist der Hebel 24 einen vorsprungartigen Stift 24c auf, der in eine Öffnung 25a des Koppelelementes 25 eingreift. Der Stift 24c sowie die Öffnung 25a bilden die zweite Achse 22.

Die Deckeleinheit 40 weist einen Arm 45 auf. Der Hebel 24 ist ebenfalls mit einem Arm 24d ausgeführt. Eine Zugfeder 14 ist an beiden Armen 45, 24d befestigt. Die Zugfeder 14 dient dazu, dass in der Offenstellung 2 gemäß Fig. 6 eine Rückbewegung über den Antrieb 30 des Deckelelementes 41 in Richtung der Schließstellung 1 möglich ist. In Offenstellung 2 des Deckelelementes 41 ist die Zugfeder 14 gespannt und übt auf den Arm 45 des Deckelelements 41 eine Zugkraft aus. Wenn der Antrieb 30 ausgehend von Fig. 6 einen Schließvorgang des Deckelelementes 41 auslöst, unterstützt die Federkraft den Mechanismus 20, um die Deckeleinheit 40 in Richtung Schließstellung 1 zu bewegen. Ausgehend von der Offenstellung 2 in Richtung Schließstellung 1 erfolgt zunächst die zweite Bewegungsphase 5, bei der der Mechanismus 20 sowie die Federkraft dafür sorgen, dass die Deckeleinheit 40 durch die Öffnung 12 des Gehäuses 11 bewegt wird. Anschließend schließt sich die erste Bewegungsphase 4 an, bei der das Deckelelement 41 um die erste Achse 21 in Richtung Kameraeinheit 10 verschwenkt wird, bis die Dichtung 43 unmittelbar auf der Kameraeinheit 10, insbesondere auf dem Objektiv, aufliegt. Innerhalb des Gehäuses 11 ist eine weitere Dichtung 46 vorgesehen, auf der die Deckeleinheit 40 in Schließstellung 1 anliegt. Das Lagerelement 31 weist eine einseitig offene Aufnahme 33 auf, in der das Koppelelement 25 drehbeweglich aufgenommen ist.
- 31: Lagerelement
- 32: Langloch
- 33: Aufnahme
- 40: Deckeleinheit
- 41: Deckelelement
- 41a: Innenseite des Deckelelementes
- 42: Blockierelement
- 43: Dichtung
- 44: Aufnahme
- 45: Arm
- 46: weitere Dichtung
- α: Winkelbereich

### Bezugszeichenliste

- 1: Schließstellung
- 2: Offenstellung
- 3: Aufnahmerichtung
- 4: erste Bewegungsphase
- 5: zweite Bewegungsphase
- 6: erster Angriffspunkt
- 6a: Stift (Deckeleinheit)
- 6b: Öffnung (Verbindungselement)
- 7: zweiter Angriffspunkt
- 7a: Stift (Koppelelement)
- 7b: Öffnung (Verbindungselement)
- 10: Kameraeinheit
- 11: Gehäuse
- 12: schlitzförmige Öffnung
- 13: Objektiv
- 14: Zugfeder
- 20: Mechanismus
- 21: erste Achse
- 22: zweite Achse
- 23: Verbindungselement
- 24: Hebel
- 24a: Kontaktierungsfläche
- 24b: Verbindungssteg
- 24c: Stift
- 24d: Arm
- 25: Koppelelement
- 25a: Öffnung
- 25b: Stift
- 25c: Öffnung
- 30: Antrieb

## Patentansprüche

1. Vorrichtung mit einer Kameraeinheit (10), die zur Bilderfassung des Außenbereiches eines Kraftfahrzeuges dient, und einem Deckelelement (41), das über einen Antrieb (30) von einer Schließstellung (1) in eine Offenstellung (2) bewegbar ist, wobei in der Schließstellung (1) des Deckelelementes (41) die Kameraeinheit (10) von außen unzugänglich sich hinter dem Deckelelement (41) befindet,
die Kameraeinheit (10) zu einer Aufnahmerichtung (3) ausgerichtet ist, bei der in der Offenstellung (2) des Deckelelementes (41) die Bilderfassung durchführbar ist, **dadurch gekennzeichnet,**
**dass** der Antrieb (30) mit einem derartigen Mechanismus (20) zusammenwirkt, dass während der Bewegung von der Schließstellung (1) in die Offenstellung (2) das Deckelelement (41) eine zweiphasige Bewegung ausführt,
wobei die zweiphasige Bewegung eine erste Bewegungsphase (4) und eine zweite Bewegungsphase (5) aufweist,
wobei während der ersten Bewegungsphase (4) das Deckelelement (41) sich um eine erste Achse (21) verschwenkt
und während der zweiten Bewegungsphase (5) das Deckelelement (41) sich um eine zweite Achse (22) verschwenkt.

2. Vorrichtung nach Anspruch 1,
**dadurch gekennzeichnet,**
**dass** die zweiphasige Bewegung eine erste Bewegungsphase (4) aufweist, bei der sich das Deckelelement (41) von der Kameraeinheit (10) entfernt, wobei insbesondere das Deckelelement (41) während der ersten Bewegungsphase (4) sich im Wesentlichen in Aufnahmerichtung (3) bewegt.

3. Vorrichtung nach einem der vorhergehenden Ansprüche,
**dadurch gekennzeichnet,**
**dass** der Mechanismus (20) innerhalb eines Gehäuses (11) angeordnet ist, das eine schlitzförmige Öffnung (12) aufweist, durch die sich das Deckelelement (41) erstreckt.

4. Vorrichtung nach Anspruch 2 oder 3,
**dadurch gekennzeichnet,**
**dass** der Mechanismus (20) eine erste Achse (21) aufweist, um die das Deckelelement (41) drehbar beweglich ist.

5. Vorrichtung nach einem der vorhergehenden Ansprüche,
**dadurch gekennzeichnet,**
**dass** das Deckelelement (41) an der der Kameraeinheit (10) zugewandten Innenseite (41a) eine Dichtung (43) aufweist, die in der Schließstellung (1) des Deckelelementes (41) auf der Kameraeinheit (10) aufliegt.

6. Vorrichtung nach einem der vorhergehenden Ansprüche,
**dadurch gekennzeichnet,**
**dass** der Mechanismus (20) derart ausgeführt ist, dass die erste Bewegungsphase (4) und die zweite Bewegungsphase (5) sequenziell ausgeführt werden oder wobei insbesondere der Mechanismus (20) derart ausgeführt ist, dass die erste Bewegungsphase (4) und die zweite Bewegungsphase (5) zumindest teilweise gleichzeitig erfolgen.

7. Vorrichtung nach Anspruch 6,
**dadurch gekennzeichnet,**
**dass** während der zweiten Bewegungsphase (5) eine Bewegung des Deckelelementes (41) um die erste Achse (21) blockiert ist.

8. Vorrichtung nach einem der vorhergehenden Ansprüche,
**dadurch gekennzeichnet,**
**dass** eine Deckeleinheit (40) vorgesehen ist, die mit dem Deckelelement (41) ausgeführt ist und durch die die erste Achse (21) verläuft, wobei insbesondere ein Verbindungselement (23) zwischen dem Antrieb (30) und der Deckeleinheit (40) angeordnet ist, wobei die Deckeleinheit (40) an der ersten Achse (21) drehbar gelagert ist und das Verbindungselement (23) an einem ersten Angriffspunkt (6) an der Deckeleinheit (40) befestigt ist.

9. Vorrichtung nach Anspruch 8,
**dadurch gekennzeichnet,**
**dass** die Deckeleinheit (40) drehbar um die erste Achse (21) an einem Hebel (24) angeordnet ist, der sich während der zweiten Bewegungsphase (5) um die zweite Achse (22) verschwenkt.

10. Vorrichtung nach Anspruch 8 oder 9,
**dadurch gekennzeichnet,**
**dass** ein Koppelelement (25) zwischen dem Antrieb (30) und dem Verbindungselement (23) angeordnet ist, wobei das Koppelelement (25) an einem zweiten Angriffspunkt (7) am Verbindungselement (23) befestigt ist, wobei insbesondere das Koppelelement (25) drehbar um die zweite Achse (22) am Hebel (24) angeordnet ist oder wobei insbesondere der Antrieb (30) ein Lagerelement (31) aufweist, an dem das Koppelelement (25) bewegbar gelagert ist.

11. Vorrichtung nach einem der vorhergehenden Ansprüche,
**dadurch gekennzeichnet,**
**dass** ein Blockierelement (42) an der Deckeleinheit (40) vorgesehen ist, das mit einer Kontaktierungsfläche (24a) am Hebel (24) derart zusammenwirkt, dass in der Schließstellung (1) des Deckelelementes (41) das Blockierelement (42) zumindest bereichsweise beabstandet zur Kontaktierungsfläche (24a) ist und in der zweiten Bewegungsphase (5) das Blockierelement (42) auf der Kontaktierungsfläche (24a) aufliegt.

12. Vorrichtung nach einem der vorhergehenden Ansprüche,
**dadurch gekennzeichnet,**
**dass** der Antrieb (30) ein Hubantrieb ist.

13. Verfahren zum Betrieb einer Vorrichtung mit einer Kameraeinheit (10), die zur Bilderfassung des Außenbereiches eines Kraftfahrzeuges dient, und einem Deckelelement (41), das über einen Antrieb (30) von einer Schließstellung (1) in eine Offenstellung (2) bewegbar ist, wobei
in der Schließstellung (1) des Deckelelementes (41) die Kameraeinheit (10) von außen unzugänglich sich hinter dem Deckelelement (41) befindet,
die Kameraeinheit (10) in einer Aufnahmerichtung (3) ausgerichtet ist, bei der in der Offenstellung (2) des Deckelelementes (41) die Bilderfassung durchführbar ist,
**dadurch gekennzeichnet,**
**dass** der Antrieb (30) mit einem derartigen Mechanismus (20) zusammenwirkt, dass während der Bewegung von der Schließstellung (1) in die Offenstellung (2) und umgekehrt das Deckelelement (41) eine zweiphasige Bewegung ausführt.

14. Verfahren nach Anspruch 13,
**dadurch gekennzeichnet,**
**dass** in einer ersten Bewegungsphase (4) das Deckelelement (41) sich von der Kameraeinheit (10) entfernt und insbesondere sich gleichzeitig im Wesentlichen in Aufnahmerichtung (3) bewegt, wobei insbesondere in der ersten Bewegungsphase (4) das Deckelelement (41) um eine erste Achse (21) gedreht wird und in einer zweiten Bewegungsphase (5) das Deckelelement (41) von der Kameraeinheit (10) weggeführt wird, wobei das Deckelelement (41) um eine zweite Achse (22) verschwenkt wird, insbesondere ohne sich um die erste Achse (22) zu drehen und oder wobei insbesondere der Mechanismus (20) innerhalb eines Gehäuses (11) angeordnet ist, das eine schlitzförmige Öffnung (12) aufweist, wobei in der ersten Bewegungsphase (4) das Deckelelement (41) außerhalb des Gehäuses (11) sich befindet und in der zweiten Bewegungsphase (5) das Deckelelement (41) durch die Öffnung (12) in Richtung der Offenstellung (2) bewegt wird.

15. Verfahren nach einem der vorhergehenden Ansprüche,
**dadurch gekennzeichnet,**
**dass** das Deckelelement (41) in der Schließstellung (1) dichtend an der Kameraeinheit (10) anliegt,
während der ersten Bewegungsphase (4) sich das Deckelelement (41) leicht von der Kameraeinheit (10) löst und um einen definierten Winkelbereich (α) um die erste Achse (21) gedreht wird, und
während der zweiten Bewegungsphase (5) das Deckelelement (41) gemeinsam mit der ersten Achse (21) entlang eines Kreissegmentes um die zweite Achse (22) verschwenkt wird.

16. Verfahren nach einem der vorhergehenden Ansprüche zum Betreiben einer Vorrichtung gemäß der Ansprüche 1 bis 12.

## Claims

1. A device having a camera unit (10), which is used to capture images of the outer region of a motor vehicle, and a cover element (41), which can be moved from a closed position (1) to an open position (2) by means of a drive (30), wherein
the camera unit (10) is situated behind the cover element (41) such that it is inaccessible from the outside when the cover element (41) is in the closed position (1),
the camera unit (10) is directed in a recording direction (3), in which image capture can be carried out when the cover element (41) is in the open position (2),
**characterised in that**
the drive (30) interacts with such a mechanism (20) that the cover element (41) executes a two-phase movement during the movement from the closed position (1) to the open position (2),
wherein the two-phase movement comprises a first movement phase (4) and a second movement phase (5),
wherein the cover element (41) pivots about a first axis (21) during the first movement phase (4)
and the cover element (41) pivots about a second axis (22) during the second movement phase (5).

2. The device according to Claim 1,
**characterised in that**
the two-phase movement has a first movement phase (4), during which the cover element (41) is displaced from the camera unit (10), wherein in particular the cover element (41) moves essentially in the recording direction (3) during the first movement phase (4).

3. The device according to one of the preceding claims,
**characterised in that**
the mechanism (20) is arranged inside a housing (11), which comprises a slot-shaped opening (12), through which the cover element (41) extends.

4. The device according to Claim 2 or 3,
**characterised in that**
the mechanism (20) comprises a first axis (21), about which the cover element (41) can be moved in a rotatable manner.

5. The device according to one of the preceding claims,
**characterised in that**
the cover element (41) has a seal (43) on the inner side (41 a) facing the camera unit (10), which seal rests on the camera unit (10) when the cover element (41) is in the closed position (1).

6. The device according to one of the preceding claims,
**characterised in that**
the mechanism (20) is configured in such a manner that the first movement phase (4) and the second movement phase (5) are carried out sequentially or wherein in particular the mechanism (20) is configured in such a manner that the first movement phase (4) and the second movement phase (5) take place at least partially simultaneously.

7. The device according to Claim 6,
**characterised in that**
a movement of the cover element (41) about the first axis (21) is blocked during the second movement phase (5).

8. The device according to one of the preceding claims,
**characterised in that**
a cover unit (40) is provided, which is configured with the cover element (41) and through which the first axis (21) runs, wherein in particular a connection element (23) is arranged between the drive (30) and the cover unit (40), wherein the cover unit (40) is mounted rotatably on the first axis (21) and the connection element (23) is fastened at the cover unit (40) at a first working point (6).

9. The device according to Claim 8,
**characterised in that**
the cover unit (40) is arranged such that it can rotate about the first axis (21) on a lever (24), which pivots about the second axis (22) during the second movement phase (5).

10. The device according to Claim 8 or 9,
**characterised in that**
a coupling element (25) is arranged between the drive (30) and the connection element (23), wherein the coupling element (25) is fastened to the connection element (23) at a second working point (7), wherein in particular the coupling element (25) is arranged such that it can rotate about the second axis (22) on the lever (24) or wherein in particular the drive (30) comprises a mounting element (31), on which the coupling element (25) is mounted in a movable manner.

11. The device according to one of the preceding claims,
**characterised in that**
a blocking element (42) is provided on the cover unit (40), which blocking element interacts with a contact face (24a) on the lever (24) in such a manner that, when the cover element (41) is in the closed position (1), the blocking element (42) is at least in some regions spaced apart from the contact face (24a) and, during the second movement phase (5), the blocking element (42) rests on the contact face (24a).

12. The device according to one of the preceding claims,
**characterised in that**
the drive (30) is a lifting drive.

13. A method for operating a device having a camera unit (10), which is used to capture images of the outer region of a motor vehicle, and a cover element (41), which can be moved from a closed position (1) to an open position (2) by means of a drive (30), wherein
the camera unit (10) is situated behind the cover element (41) such that it is inaccessible from the outside when the cover element (41) is in the closed position (1),
the camera unit (10) is directed in a recording direction (3), in which image capture can be carried out when the cover element (41) is in the open position (2),
**characterised in that**
the drive (30) interacts with such a mechanism (20) that the cover element (41) executes a two-phase movement during the movement from the closed position (1) to the open position (2) and vice versa.

14. The method according to Claim 13,
**characterised in that**
the cover element (41) is removed from the camera unit (10) during the first movement phase (4) and in particular at the same time moved essentially in the recording direction (3), wherein the cover element (41) is rotated about a first axis (21) in particular during the first movement phase (4) and the cover element (41) is guided away from the camera unit (10) during a second movement phase (5), wherein the cover element (41) is pivoted about a second axis (22), in particular without rotating about the first axis (21) and/or wherein in particular the mechanism (20) is arranged inside a housing (11), which has a slot-shaped opening (12), wherein the cover element (41) is situated outside the housing (11) during the first movement phase (4) and the cover element (41) is moved through the opening (12) in the direction of the open position (2) during the second movement phase (5).

15. The method according to one of the preceding claims,
**characterised in that**
the cover element (41) bears in a sealing manner against the camera unit (10) in the closed position (1),
the cover element (41) detaches easily from the camera unit (10) and is rotated by a defined angle range (α) about the first axis (21) during the first movement phase (4), and
the cover element (41) is pivoted together with the first axis (21) along a circular segment about the second axis (22) during the second movement phase (5).

16. The method according to one of the preceding claims for operating a device according to Claims 1 to 12.

## Revendications

1. Dispositif comprenant une unité à caméra (10) dévolue à la capture d'images de la région extérieure d'un véhicule automobile, et un élément (41) formant capot et pouvant être mû d'une position de fermeture (1) à une position d'ouverture (2) par l'intermédiaire d'un entraînement (30), sachant que,
dans la position de fermeture (1) de l'élément (41) formant capot, ladite unité à caméra (10), inaccessible de l'extérieur, se trouve derrière ledit élément (41) formant capot,
ladite unité à caméra (10) étant orientée vers une direction d'enregistrement (3) dans laquelle la capture d'images peut s'opérer dans la position d'ouverture (2) dudit élément (41) formant capot,
**caractérisé par le fait**
**que** l'entraînement (30) coopère avec un mécanisme (20) conçu de telle sorte que l'élément (41) formant capot exécute un mouvement en deux phases, au cours du mouvement de la position de fermeture (1) à la position d'ouverture (2),
ledit mouvement en deux phases comprenant une première phase (4) et une seconde phase (5),
sachant que ledit élément (41) formant capot pivote autour d'un premier axe (21) durant la première phase (4) du mouvement,
et **que** ledit élément (41) formant capot pivote autour d'un second axe (22) durant la seconde phase (5) dudit mouvement.

2. Dispositif selon la revendication 1,
**caractérisé par le fait**
**que** le mouvement en deux phases comprend une première phase (4) au cours de laquelle l'élément (41) formant capot s'éloigne de l'unité à caméra (10), sachant que ledit élément (41) formant capot se meut notamment, pour l'essentiel, dans la direction d'enregistrement (3) durant ladite première phase (4) dudit mouvement.

3. Dispositif selon l'une des revendications précédentes,
**caractérisé par le fait**
**que** le mécanisme (20) est logé à l'intérieur d'un boîtier (11) pourvu d'un orifice (12) en forme de fente, traversé par l'élément (41) formant capot.

4. Dispositif selon la revendication 2 ou 3,
**caractérisé par le fait**
**que** le mécanisme (20) présente un premier axe (21) autour duquel l'élément (41) formant capot est doué de mobilité rotatoire.

5. Dispositif selon l'une des revendications précédentes,
**caractérisé par le fait**
**que** l'élément (41) formant capot comporte, à la face intérieure (41 a) tournée vers l'unité à caméra (10), une garniture d'étanchement (43) appliquée contre ladite unité à caméra (10) dans la position de fermeture (1) dudit élément (41) formant capot.

6. Dispositif selon l'une des revendications précédentes,
**caractérisé par le fait**
**que** le mécanisme (20) est réalisé de façon telle que la première phase (4) du mouvement et la seconde phase (5) dudit mouvement se déroulent séquentiellement, ou bien ledit mécanisme (20) est réalisé, en particulier, de façon telle que ladite première phase (4) du mouvement et ladite seconde phase (5) dudit mouvement s'effectuent au moins partiellement en simultanéité.

7. Dispositif selon la revendication 6,
**caractérisé par le fait**
**qu'**un mouvement de l'élément (41) formant capot, autour du premier axe (21), est bloqué durant la seconde phase (5) du mouvement.

8. Dispositif selon l'une des revendications précédentes,
**caractérisé par le fait**
**qu'**il est prévu une unité d'occultation (40) munie de l'élément (41) formant capot, et à travers laquelle le premier axe (21) s'étend, un élément de liaison (23) étant notamment interposé entre l'entraînement (30) et ladite unité d'occultation (40), laquelle unité d'occultation (40) est montée à rotation sur ledit premier axe (21), ledit élément de liaison (23) étant fixé à ladite unité d'occultation (40) en un premier point (6) de venue en prise.

9. Dispositif selon la revendication 8,
**caractérisé par le fait**
**que** l'unité d'occultation (40) est implantée, avec faculté de rotation autour du premier axe (21), sur un levier (24) qui pivote autour du second axe (22) durant la seconde phase (5) du mouvement.

10. Dispositif selon la revendication 8 ou 9,
**caractérisé par le fait**
**qu'**un élément d'accouplement (25) est interposé entre l'entraînement (30) et l'élément de liaison (23), ledit élément d'accouplement (25) étant fixé audit élément de liaison (23) en un second point (7) de venue en prise, sachant notamment que ledit élément d'accouplement (25) est disposé sur le levier (24) avec faculté de rotation autour du second axe (22) et sachant, en particulier, que ledit entraînement (30) présente un élément de montage (31) sur lequel ledit élément d'accouplement (25) est monté avec mobilité.

11. Dispositif selon l'une des revendications précédentes,
**caractérisé par le fait**
**qu'**un élément de blocage (42) prévu sur l'unité d'occultation (40) coopère avec une surface (24a) de venue en contact, sur le levier (24), de telle sorte que ledit élément de blocage (42) soit situé, au moins par zones, à distance de ladite surface (24a) de venue en contact dans la position de fermeture (1) de l'élément (41) formant capot, et que ledit élément de blocage (42) soit en applique contre ladite surface (24a) de venue en contact durant la seconde phase (5) du mouvement.

12. Dispositif selon l'une des revendications précédentes,
**caractérisé par le fait**
**que** l'entraînement (30) est un entraînement de levage.

13. Procédé d'actionnement d'un dispositif comprenant une unité à caméra (10) dévolue à la capture d'images de la région extérieure d'un véhicule automobile, et un élément (41) formant capot et pouvant être mû d'une position de fermeture (1) à une position d'ouverture (2), par l'intermédiaire d'un entraînement (30), sachant que,
dans la position de fermeture (1) de l'élément (41) formant capot, ladite unité à caméra (10), inaccessible de l'extérieur, se trouve derrière ledit élément (41) formant capot,
ladite unité à caméra (10) étant orientée dans une direction d'enregistrement (3) dans laquelle la capture d'images peut s'opérer dans la position d'ouverture (2) dudit élément (41) formant capot,
**caractérisé par le fait**
**que** l'entraînement (30) coopère avec un mécanisme (20) conçu de telle sorte que l'élément (41) formant capot exécute un mouvement en deux phases au cours du mouvement de la position de fermeture (1) à la position d'ouverture (2), et inversement.

14. Procédé selon la revendication 13,
**caractérisé par le fait**
**que**, durant une première phase (4) du mouvement, l'élément (41) formant capot s'éloigne de l'unité à caméra (10) et se meut en particulier simultanément, pour l'essentiel dans la direction d'enregistrement (3), sachant notamment que, durant ladite première phase (4) du mouvement, l'élément (41) formant capot est animé d'une rotation autour d'un premier axe (21) et que, durant une seconde phase (5) dudit mouvement, ledit élément (41) formant capot est déplacé à l'écart de ladite unité à caméra (10), lequel élément (41) formant capot est alors animé d'un pivotement autour d'un second axe (22), en particulier sans tourner autour dudit premier axe (21) ; et/ou sachant notamment que le mécanisme (20) est logé à l'intérieur d'un boîtier (11) pourvu d'un orifice (12) en forme de fente, l'élément (41) formant capot étant situé à l'extérieur dudit boîtier (11) durant la première phase (4) du mouvement, et ledit élément (41) formant capot étant mû à travers ledit orifice (12) durant la seconde phase (5) dudit mouvement, en direction de la position d'ouverture (2).

15. Procédé selon l'une des revendications précédentes,
**caractérisé par le fait**
**que** l'élément (41) formant capot est en applique de manière étanche contre l'unité à caméra (10), dans la position de fermeture (1),
ledit élément (41) formant capot se dissocie légèrement d'avec ladite unité à caméra (10) durant la première phase (4) du mouvement, et est animé d'une rotation selon une plage angulaire (α) bien définie, autour du premier axe (21), et
durant la seconde phase (5) dudit mouvement, ledit élément (41) formant capot est animé d'un pivotement autour du second axe (22), le long d'un secteur circulaire, conjointement audit premier axe (21).

16. Procédé selon l'une des revendications précédentes, dédié à l'exploitation d'un dispositif conforme aux revendications 1 à 12.
